# EUROPÄISCHE PATENTANMELDUNG

(11) **EP 1 201 503 A2**
(43) Veröffentlichungstag der Anmeldung: **02.05.2002**
(21) Anmeldenummer: 01123858.1
(22) Anmeldetag: 05.10.2001
(51) Int. Cl.: B60R 13/10

(54) **Kennzeichnungsträger**

(30) Priorität: 27.10.2000 DE 10053429
(71) Anmelder: Stempel-Herbst GmbH, 81829 München (DE)
(72) Erfinder: Binder, Alfons, 81827 München (DE)
(74) Vertreter: Fischer, Matthias

(57) **Zusammenfassung**

Die Erfindung betrifft einen Kennzeichnungsträger (1), der auf eine Unterlage aufbringbar ist, und der einen Kennzeichnungsaufdruck (2) aufweistund der dadurch gekennzeichnet ist, daß er wenigstens bereichsweise eine Farbschicht aufweist, die aus einem Farbstoff besteht, dessen Farbton bei Wärmeeinwirkung irreversibel in einen anderen Farbton umschlägt.

## Beschreibung

Die vorliegende Erfindung betrifft einen Kennzeichnungsträger der auf eine Unterlage aufbringbar ist und der einen Kennzeichnungsaufdruck aufweist.

Kennzeichnungsträger sind vor allem Kennzeichnungsschilder für Kraftfahrzeuge oder Zulassungs- oder Prüfplaketten für Kraftfahrzeuge ganz allgemein aber auch andere Schilder und Plaketten oder im Innenbereich Dokumente, wie zum Beispiel Urkunden, amtliche Papiere wie Kfz-Zulassungsscheine, Führerscheine und dergleichen, die fälschungssicher und nach mißbräuchlichem Ablösen nicht wiederverwendbar ausgebildet sein sollen.

Trotz aller Vorsicht auf diesem Gebiet gelingt es immer wieder Personen. Kfz-Schilder mit Heizgeräten derart zu erwärmen, daß sämtliche Kennzeichnungsträger zusammen mit einem Reflexionsschichtträger abgelöst werden und auf ein anderes Fahrzeug in widerrechtlicher Art und Weise aufgebracht werden. Da die Kennzeichnungsträger also zwar beim Ablösen vom Reflexionsschichtträger zerstört werden, mit ihm zusammen jedoch unzerstört transportiert werden können, ist ein mißbräuchlicher Austausch von Kennzeichnungsträgern offenbar problemlos möglich.

Es ist Aufgabe der Erfindung, einen Kennzeichnungsträger vorzuschlagen, bei dem die eben beschriebenen, aus dem Stand der Technik bekannten Nachteile vermieden oder zumindest stark vermindert sind.

Die Aufgabe wird gelöst mit einem Kennzeichnungsträger der auf eine Unterlage aufbringbar ist und der einen Kennzeichnungsaufdruck aufweist, der dadurch gekennzeichnet ist, daß er wenigstens bereichsweise eine Farbschicht aufweist die aus einem Farbstoff besteht. dessen Farbton bei Wärmeeinwirkung irreversibel in einen anderen Farbton umschlägt. Sollte also eine Person einen Kennzeichnungsträger durch ein Heizgerät von einer Unterlage ablösen, um ihn auf eine andere Unterlage zu übertragen, so wird er aufgrund der Wärmeeinwirkung den Kennzeichnungsträger in dem Bereich, in dem er eine Farbschicht aufweist, die bei Wärmeeinwirkung irreversibel in einen anderen Farbton umschlägt im Kennzeichen derart verändern, daß er leicht von außen als manipuliert erkennbar ist.

In einer vorteilhaften Weiterbildung der Erfindung ist der Umschlagspunkt der Farbe auf einen vorbestimmten Temperaturbereich eingestellt. Damit kann man sich in vorteilhafter Weise regional unterschiedlichen Klimabedingungen anpassen.

In einer weiteren vorteilhaften Weiterbildung der Erfindung ist die wenigstens bereichsweise vorliegende Farbschicht in Form einer Zeichnung oder eines Textes ausgebildet. Dies hat den Vorteil, daß man beispielsweise den Text "ungültig" in der umschlagfähigen Farbe auf den Kennzeichnungsträger aufdruckt. Nach Wärmeeinwirkung werden sich die Plakette bzw. der Kennzeichnungsträger selbst für ungültig erklären, dadurch daß nun dieses Wort "ungültig" in einem anderen Farbton zu lesen ist. Ebenso kann man durch gewollte Konditionierung von Kennzeichnungsträgern nach Anspruch 1 ganz bestimmte Daten in dem Moment in dem ein Kennzeichnungsträger seine Wirksamkeit bekommen soll, sichtbar machen, beispielsweise ein Datum oder einen Namen oder irgendeine andere Textangabe oder auch ein Bild.

In vorteilhafter Weise werden Kennzeichnungsträger mit einer Farbschicht die eine Farbe enthält, wie sie den US-Patenten US 4, 522, 429, US 4, 632, 429 und US 4, 867, 481 beschrieben ist, versehen. Der Inhalt dieser US-Patentschriften wird voll inhaltlich zur Offenbarung der vorliegenden Anmeldung hereingenommen. Die in den Ansprüchen genannte Farbe schlägt im Farbton irreversibel um. Das heißt eine derart behandelte Plakette oder ein derart behandelter Kennzeichnungsträger werden entweder endgültig aktiviert oder endgültig zerstört.

Im folgenden wird die Erfindung anhand einer Zeichnung kurz beschrieben.
- Fig. 1: zeigt einen erfindungsgemäßen Kennzeichnungsträger schematisch von der Seite.
- Fig. 2: zeigt den Kennzeichnungsträger von Figur 1 von oben vor Aufbringen von Wärme auf den Kennzeichnungsträger.
- Fig. 3: zeigt den Kennzeichnungsträger von Figur 1 nach dem Aufbringen von Wärme auf den Kennzeichnungsträger.

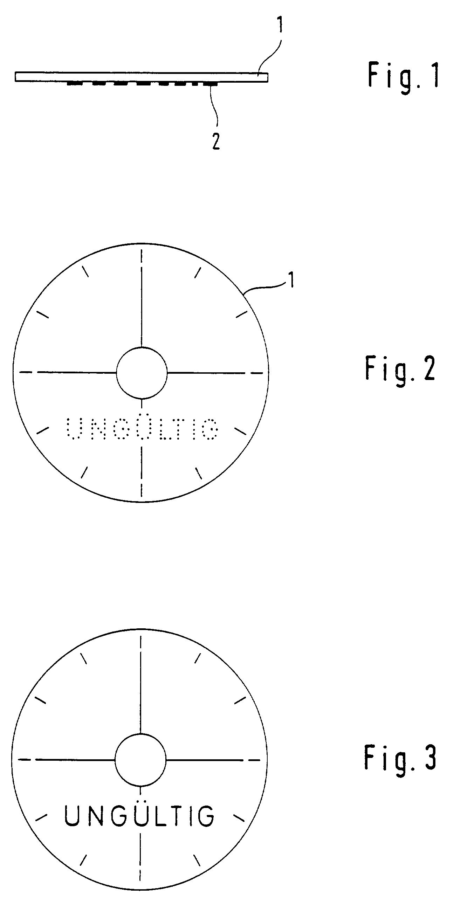

Figur 1 zeigt schematisch nur die wichtigsten hier für die Beschreibung der Erfindung relevanten Teile eines Kennzeichnungsträgers, nämlich eine Trägerfolie 1 auf die bereichsweise eine Farbschicht 2 aufgebracht ist. Weitere für jede Art von Kennzeichnungsträgern zweckmäßigen Aufdrucke sind im vorliegenden Fall nicht erkennbar oder nicht angegeben, da sie für die Beschreibung der Erfindung nicht von Bedeutung sind.

Figur 2 zeigt den erfindungsgemäßen Kennzeichnungsträger von vorne, wobei hier nur schematisch eine zifferblattartige Feldaufteilung, auch beispielhaft aufgebracht, zu erkennen ist. Die von der Sichtweise von Figur 2 her nicht erkennbare Farbschicht 2 wird nicht nur. weil sie möglicherweise hinter der Trägerschicht liegt verdeckt, sie wäre auch davorliegend weil möglicherweise als gleichsam transparente irreversibel umschlagende Farbe verwendet, nicht erkennbar.

Bringt man auf den Kennzeichnungsträger nach Figur 2 Wärme auf, so wird der Farbton der umschlagfähigen Farbe in eine für das vorliegende Beispiel sichtbaren Farbton umschlagen und da, wie in Figur 2 durch Pünktchen dargestellt ist, die Farbe in Form eines Schriftzugs "ungültig" angebracht ist, wird in einem Kennzeichnungsträger wie in Figur 3 dargestellt ist, das Wort "ungültig" erscheinen. Damit hat man den Wert eines Kennzeichnungsträgers nach der Erfindung am besten beschrieben.

Statt einer Ungültigmachung eines entsprechenden Kennzeichnungsträgers könnte auch der Schriftzug "ungültig" durch ein aktuell einstellbares Datum oder Aktenzeichen oder dergleichen ersetzt sein. Damit könnte man die definierte Zuordnung eines entsprechenden Kennzeichnungsträgers einer Person, einem Fahrzeug, einem Datum, etc. erreichen.

Eine für den erfindungsgemäßen Kennzeichnungsträger verwendbare Farbe ist beispielsweise bei der Firma Nocopi Technologies Inc. in 537 Apple Street W. Conshohocken, PA 19428-2903, USA unter der Bezeichnung rub & reveal Colorless (rubs to blue) GJF 1-41 zu erhalten.

## Patentansprüche

1. Kennzeichnungsträger, der auf eine Unterlage aufbringbar ist, und der einen Kennzeichnungsaufdruck aufweist, **dadurch gekennzeichnet, daß** er wenigstens bereichsweise eine Farbschicht aufweist, die aus einem Farbstoff besteht. dessen Farbton bei Wärmeeinwirkung irreversibel in einen anderen Farbton umschlägt.

2. Kennzeichnungsträger nach Anspruch 1, **dadurch gekennzeichnet, daß** der Umschlagspunkt der Farbe auf einen vorbestimmten Temperaturbereich eingestellt ist.

3. Kennzeichnungsträger nach Anspruch 1 oder 2, **dadurch gekennzeichnet, daß** die wenigstens bereichsweise vorliegende Farbschicht in Form einer Zeichnung oder eines Textes ausgebildet ist.

4. Kennzeichnungsträger nach Anspruch 1, 2 oder 3, **dadurch gekennzeichnet, daß** die Farbschicht eine Farbe enthält, wie sie in den US Patenten US 4,522,429, US 4,632,429 und US 4,867,481 beschrieben ist.
